# EUROPÄISCHE PATENTSCHRIFT

(11) **EP 1 170 344 B1**
(45) Veröffentlichungstag und Bekanntmachung des Hinweises auf die Patenterteilung: **16.05.2007**
(21) Anmeldenummer: 01114542.2
(22) Anmeldetag: 16.06.2001
(51) Int. Cl.: C09J 7/02, A47G 1/17

(54) **Kunststoffteil**
Plastic piece
Pièce en matière plastique

(30) Priorität: 08.07.2000 DE 10033399; 29.11.2000 DE 10059324
(43) Veröffentlichungstag der Anmeldung: 09.01.2002
(73) Patentinhaber: tesa AG, 20253 Hamburg (DE)
(72) Erfinder: Frank, Achim, 20259 Hamburg (DE); Junghans, Andreas, 22457 Hamburg (DE); Lühmann, Bernd, Dr., 22844 Norderstedt (DE)

(56) Entgegenhaltungen:
- EP-A- 0 735 121
- EP-A- 0 839 987
- DE-C- 4 222 849
- DE-U- 9 219 188
- LU-A- 35 863
- US-A- 4 127 689
- US-A- 4 320 174
- US-A- 5 913 480

## Beschreibung

Die Erfindung betrifft die Verwendung eines Kunststoffteils für eine Verklebung mit einer Klebfolie, beidseitig haftklebrig, die durch dehnendes Verstrecken in der Verklebungsebene rückstands- und zerstörungsfrei wiederablösbar ist.

Elastisch oder plastisch hochdehnbare (stripfähige) Selbstklebebänder, welche sich durch im wesentlichen in der Verklebungsebene dehnendes Verstrecken rückstands- und zerstörungsfrei wiederablösen lassen, sind aus US 4,024,312, DE 33 31 016, WO 92/11332, WO 92/11333, DE 42 22 849, WO 95/06691, DE 195 31 696, DE 196 26 870, DE 196 49 727, DE 196 49 728, DE 196 49 729, DE 197 08 366, DE 197 20 145, WO 99/31193 und WO 99/37729 bekannt.

Eingesetzt werden sie häufig in Form von ein- oder beidseitig haftklebrigen Klebfolienstreifen (Klebebandstreifen, Klebestreifen), welche bevorzugt einen nicht haftklebrigen Anfasserbereich aufweisen, von welchem aus der Ablöseprozeß eingeleitet wird. Besondere Anwendungen entsprechender Selbstklebebänder finden sich u. a. in DE 42 33 872, DE 195 11 288, US 5,507,464, US 5,672,402 und WO 94/21157. Spezielle Ausführungsformen sind z. B. in DE 44 28 587, DE 44 31 914, WO 97/07172, DE 196 27 400, WO 98/03601 und DE 196 49 636, DE 197 20 526, DE 197 23 177, DE 297 23 198, DE 197 26 375, DE 197 56 084 und DE 197 56 816 beschrieben.

Bevorzugte Einsatzgebiete vorgenannter Klebfolienstreifen beinhalten insbesondere die rückstands- und zerstörungsfrei wiederablösbare Fixierung leichter bis mittelschwerer Gegenstände im Wohn-, Arbeits- und Bürobereich. Sie ersetzen hierbei klassische Befestigungsmittel, wie z. B. Stecknadeln, Pin-Nadeln, Heftzwecken, Nägel, Schrauben, klassische Selbstklebebänder und Flüssigklebstoffe, um nur einige zu nennen. Wesentlich für den erfolgreichen Einsatz o. g. Klebfolienstreifen ist neben der Möglichkeit des rückstands- und zerstörungsfreien Wiederablösens verklebter Gegenstände deren einfache und schnelle Verklebung sowie für die vorgesehene Verklebungsdauer deren sicherer Halt.

Entsprechend obengenannter Patentschriften geeignete Haftklebemassen umfassen primär solche auf Basis von Naturkautschuk-Harz Gemischen, Synthesekautschuk-Harz Gemischen sowie Acrylatcopolymeren. In der praktischen Anwendung haben sich jedoch durchweg Haftklebemassen auf Basis von Styrolblockcopolymer-Harz Gemischen am Markt etabliert. So nutzen die Produkte Command^{®} Adhesive der Minnesota Mining and Manufacturing Co. Inc., St. Paul (USA), tesa^{®} Power-Strips^{®} , tesa^{®} Power-Strips^{®} mini und tesa^{®} Poster-Strips der Beiersdorf AG, Hamburg (D) und Plastofix^{®} Formule Force 1000 der Fa. Plasto (F) sämtlichst eine Haftklebemasse auf Basis von Styrolblockcopolymer-Harz Gemischen.

Typisch für Haftklebemassen auf Basis von Styrolblockcopolymer-Harz Gemischen ist ihre im Vergleich zu z. B. Acrylatcopolymeren signifikant höhere Anfälligkeit für thermooxidative Schädigung, Ozonschädigung sowie Schädigung durch UV-Strahlung. Vorgenanntes gilt besonders für Haftklebemassen auf Basis von solchen Styrolblockcopolymeren, welche Elastomerketten mit ungesättigten Kohlenstoff-Kohlenstoff Bindungen enthalten, wie dies z. B. für polybutadienblockhaltige und polyisoprenblockhaltige Styrolblockcopolymere der Fall ist. Die Rezeptierung von Haftklebemassen auf Basis vorgenannter Styrolblockcopolymere berücksichtigt daher typischerweise Maßnahmen zu einer entsprechenden Stabilisierung derselben. So werden Styrolblockcopolymeren und Klebharzen bereits im Rahmen ihrer Herstell-Prozesse Antioxidantien und z. T. auch Lichtschutzmittel zugesetzt. Zur Erzeugung eines ausreichenden Alterungsschutzes für z. B. die Klebmassecompoundierung, weitere Verarbeitungsschritte, wie beispielsweise die Verarbeitung aus der Schmelze, Lagerzeiten sowie die Nutzungsdauer der die entsprechenden Haftklebemassen enthaltenden Produkte werden den Haftklebemassen bei ihrer Herstellung typischerweise zusätzlich oft mehrere Stabilisatoren, wie z. B. primäre Antioxidantien, sekundäre Antioxidantien, C-Radikalfänger, Metallfänger sowie unterschiedliche Arten von Lichtschutzmitteln zugemischt.

Eine hohe Alterungsstabilität ist für haftklebrige, durch dehnendes Verstrecken in der Verklebungsebene rückstands- und zerstörungsfrei wiederablösbare Klebfolienstreifen insbesondere in Bezug auf ihre vielfältigen Anwendungsbereiche essentiell. Bei der Rezeptierung ist es nötig, entsprechende Additive einzusetzen. Und auch die besondere Anfälligkeit eines aus der Klebfuge hervorstehenden Anfassers bei solchen Klebfolien ist erkannt.

So beschreibt die DE 42 22 849 z. B. einen "Streifen einer Klebfolie und seine Verwendung für eine wiederlösbare Verklebung" (DE 42 22 849 C1 - Titel), "wobei das eine Ende des Streifens beidseits mit einer UV-undurchlässigen Abdeckung versehen ist, die Zugleich als Anfasser zum Ziehen dient" (DE 42 22 849 C1 - Anspruch 1). Ziel des UV-undurchlässigen Anfassers ist die Vermeidung von Abrissen, wenn an dem Streifen zum Zwecke des Trennens gezogen wird (DE 42 22 849 C1 - S. 2, Z. 36, 37).

Dem Beipackzettel der tesa^{®} Power-Strips^{®}, tesa^{®} Power-Strips^{®} mini und tesa^{®} Poster-Strips ist desweiteren zu entnehmen, daß diese für Verklebungen auf Fensterscheiben ungeeignet sind.

Es hat damit nicht an Vorschlägen gefehlt, wie denn derartige Klebfolien ausgerüstet werden sollen, um qualitativ gleichmäßig gute Produkte anbieten zu können. Und diese Vorschläge und ihre sich in den Handelsprodukten niederschlagenden Resultate sind auch unbestritten geeignet, diese Klebfolien gegenüber ihren ursprünglichen Produktvarianten zu verbessern. Gleichwohl aber gibt es immer wieder Fälle in der täglichen Praxis, bei denen offenbar unzulängliche Produkte eingesetzt werden, ohne daß erklärlich wäre, warum denn diese Produkte mangelhaft waren, etwa hinsichtlich Anfaßklebrigkeit, oder auch hinsichtlich reduzierter Kippscherstandzeit einer damit vorgenommen Verklebung, und auch die Schälfestigkeit einer damit vorgenommenen Verklebung kann schlechte Ergebnisse zeigen, ohne daraus einen Hinweis ableiten zu können, weswegen dies denn so sein mag. Auftretende Reißer sind also nach wie vor ein Problem.

Aufgabe der vorliegenden Erfindung war es, hier Abhilfe zu schaffen, insbesondere dem Verbraucher ein qualitativ stets gleichmäßig hochwertiges Produkt anbieten zu können, ohne bei seiner Verwendung enttäuscht zu werden hinsichtlich der Leistungsfähigkeit einer damit vorgenommenen Verklebung und ihrer späteren Auflösung, insbesondere durch Reißer.

Gelöst wird diese Aufgabe durch die Verwendung eines Kunststoffteils, wie es in den Ansprüchen näher gekennzeichnet ist.

Es zeigte sich nämlich, daß den bisherigen derartigen Kunststoffteilen, insbesondere Haken, nicht die ihr angemessene Aufmerksamkeit gewidmet wurde, sowohl in der Patentliteratur als auch in der Praxis der diversen im Handel erhältlichen Produkte. Denn trotz aller bisher gemachten Aufwendungen kommt es immer wieder zu Reißern beim späteren Ablösen. Selbst die im Handel erhältlichen transparenten Haken zu "command adhesive" der 3M sind ohne jeden UV-Schutz, obgleich die Klebmasse der entsprechenden Klebfolien eine solche auf Basis Elastomer-Harz-Gemisch ist. Das Problem ist im Stand der Technik nicht erkannt. Und bei den in ganz verschiedene Richtung gehenden Lösungsversuchen zum Problem "Reißer" ist auch kein Hinweis aus dem Stand der Technik abzuleiten, ob denn bei transparenten Haken und dergleichen überhaupt ein derartiges Problem auftritt und wie man es denn lösen könnte.

Eine vergleichende Untersuchung von tesa^{®} Power-Strips^{®}, tesa^{®} Power-Strips^{®} mini, tesa^{®} Poster-Strips, Command^{®} Adhesive Klebestreifen und Plastofix^{®} Formule Force 1000 Klebestreifen (Haftklebemassen der genannten Klebestreifen basieren sämtlichst auf Styrolblockcopolymer-Harz Gemischen) zeigt, daß sämtliche der vorgenannten Klebestreifen eine signifikante Verschlechterung ihrer Verklebungsleistung nach UV-Exposition aufweisen, dies bis hin zum völligen Verlust jeglicher Haftklebrigkeit.

Es zeigt sich somit, daß die bislang im Markt befindlichen durch dehnendes Verstrecken in der Verklebungsebene rückstands- und zerstörungsfrei wiederablösbaren Klebfolien über keinen ausreichenden Schutz verfügen, der sie dazu befähigt, auch unter in Wohn-, Arbeits- und Büroumgebung etc. üblicherweise auftretenden UV-Expositionen ihre ursprüngliche Verklebungsleistung dauerhaft beizubehalten.

### Klebefolien

Erfindungsgemäß gegen UV-Degradation zu schützende Klebefolien beinhalten insbesondere solche entsprechend US 4,024,312, DE 33 31 016, WO 92/11333, DE 42 22 849, WO 95/06691, DE 196 26 870, DE 196 49 727, DE 196 49 728, DE 196 49 729 und DE 197 08 366, welche Haftklebemassen auf Basis von Elastomer-Harz Gemischen nutzen. Insbesondere nutzen erfindungsgemäße Klebefolien Haftklebemassen auf Basis von polymeren Dienen, wie z. B. Naturkautschuk, synthetischem Polyisopren und Polybutadien. Des weiteren nutzen erfindungsgemäße Klebefolien Haftklebemassen auf Basis von Styrolblockcopolymeren. Bevorzugte Styrolblockcopolymere beinhalten solche mit Elastomerblöcken auf Basis von 1,3-Dienen, wie z. B. Polyisopren, Polybutadien, Isopren-Butadien Copolymeren sowie den zu vorgenannten Systemen korrespondierenden partiell oder vollständig hydrierten Analoga. Des weiteren nutzen erfindungsgemäße Klebefolien Haftklebemassen auf Basis statistischer Copolymere konjugierter Diene und weiterer polymerisierbarer Verbindungen, wie z. B. Styrol-Butadien Copolymere oder säurefunktionalisierten Styrol-Butadien Copolymere, um nur einige zu nennen. Desweiteren nutzen erfindungsgemäß gegen UV-Degradation zu schützende Klebefolien Haftklebemassen auf Basis von polyolefinischen Elastomeren. Erfindungsgemäß einsetzbar sind desweiteren Klebefolien mit Haftklebemassen auf Basis von Gemischen vorgenannter Elastomere sowie auf Basis von Abmischungen vorgenannter Elastomere mit weiteren Polymeren.

### Kunststoffteil

Hier sind insbesondere Spritzgussmassen geeignet, wie PMMA POM, PC und Polyester, vor allem aber Polystyrol, bzw. Mischungen solcher Komponenten. Dabei kann die Spritzgussmasse den UV-Absorber bereits enthalten, oder er wird der Masse z.B. mit einem Farbbatch zugesetzt. Aber auch in einem transparenten Lack oder einer solchen Schutzfolie kann der UV-Absorber enthalten sein. Besonders geeignet ist jedoch Spritzguss aus Polystyrol mit UV-Absorber vom Typ Benzotriazol.

### Beispiel 1a

Es wurden durch Spritzguss glasklare, farblos transparente Platten (Länge x Breite = 50 x 25 mm) mit einer Dicke von 1,25 +/- 0,25 mm aus Polystyrol (PS 158 K - BASF und Empera 123 - BP Chemicals) und den analogen vom Hersteller mit UV-Absorber (Hydroxyphenylbenzotriazol) ausgestatteten Typen PS 158 K 72819 UV und Empera 123 UV hergestellt. Diese Platten wurden mittels, durch Dehnen rückstandsfrei wiederablösbarer Klebestreifen (einschichtige Klebstofffolien mit Rezeptur:

50 Teile Foralyn 110 (Hercules), 50 Teile Vector 4211 (Exxon Chemicals), 0,5 Teile Irganox 1010 (Ciba), bei Dicke 650 µm wurde eine Zugfestigkeit von 8 MPa und eine Reißdehnung von 1300% ermittelt.) (L X B = 50 x 20 mm), welche an einem Ende beidseitig mit einem anfassbaren nicht klebrigen Bereich (durch Abdeckung mit einer silikonisierten 23 µm PET - Folie) (L x B = 14 x 20 mm) ausgestattet sind, in der Art auf glasierte Kachel geklebt, dass der anfassbare Bereich 1 mm in die Klebfuge hineinreicht. Dazu wurde der Klebestreifen (oberseitig mit Trennpapier abgedeckt) auf die Kachel gelegt und durch 6 maliges Überrollen (10 m/s) mit einer 2 kg-Andruckrolle angedrückt. Die oben beschriebenen Platten aus Polystyrol wurden nach Entfernen des Trennpapieres mittels, vertikal auf die gesamte Klebemasse gleichmäßig einwirkenden, Andruck (10 s, 100 N) in der Art aufgeklebt, dass der gesamte klebende Bereich des Klebestreifens abgedeckt war.

So präparierte Muster wurden einer UV-Exposition ausgesetzt. Als UV-Quelle diente ein "Atlas Suntest CPS+" ausgerüstet mit einer Xenonröhre. Für sämtliche Versuche wurde eine Bestrahlungsstärke von 500 W/m² unter Verwendung eines Fensterglasfilters eingestellt. Der Abstand zwischen Klebestreifen und Strahlungsquelle betrug 15 cm. Die Lagerzeit im Suntester betrug 8 Tage. Die Temperatur betrug während der Bestrahlung konstant 20 ± 2 °C. Die Muster wurden innerhalb von 24 h nach UV-Exposition in der Art beurteilt, dass die Klebestreifen händisch durch Ziehen am nicht-klebrigen Anfassbereich dehnend aus der Klebfuge herausgelöst wurden (der max. Winkel zur Verklebungsfläche beim Ablösen betrug 5 °, die typische Ablösegeschwindigkeit betrug ca. 10 cm/s). Beurteilt wurde, ob sich der Klebestreifen reißer- und rückstandsfrei in beschriebener Weise ablösen ließ.

### Ergebnis:

Alle Muster, welche unter Verwendung von nicht UV-stabilisiertem Rohstoff hergestellt wurden, ließen sich nicht reißerfrei ablösen.

Alle Muster, welche unter Verwendung der UV-stabilisierten Rohstoff-Typen hergestellt wurden, ließen sich reißer- und rückstandsfrei ablösen.

### Beispiel 1b

Es wurden Platten analog Beispiel 1 a durch Spritzgießen hergestellt mit dem Unterschied, dass zu dem hier verwendetem Polystrol PS 158 K (BASF) im Spritzgussprozess ein Premix aus PS 158 K (BASF) und Tinuvin 326 (CIBA) in der Art zugegeben wurde, dass eine Tinuvin 326 - Konzentration von 0,1% oder 0,2% oder 0,3% im Kunststoff resultierte. Verklebung, UV-Exposition und Beurteilung der Muster erfolgte analog Beispiel 1a.

### Ergebnis:

Alle Muster, welche ohne Verwendung von Tinuvin 326 hergestellt wurden, ließen sich nicht reißerfrei ablösen.

Alle Muster, welche unter Zugabe von Tinuvin 326 zum Rohstoff beim Spritzguss hergestellt wurden, ließen sich reißer- und rückstandsfrei ablösen.

### Beispiel 2:

Es wurden Klebestreifen analog Beispiel 1a mit Hilfe des im Handel erhältlichen tesa Power-Strips^{®} Befestigungssystems, wie auch in DE 19537323, EP 766941, US 5913480 oder in DE 19729706 und EP 832588 beschrieben, auf glasierter Kachel verklebt (gemäß Beispiel 1a). Die dazu verwendeten glasklaren, farblos transparenten Basisplatten wurden durch Spritzguss aus PS 158 K (BASF) hergestellt. Transparente farbige Haken, durch Spritzguss aus PS 158 K (BASF) und Zugabe von Tinuvin 326 (CIBA) - enthaltender Farbe (Bezeichnung und Zugabe siehe unten) hergestellt, wurden gemäß genannter Patente auf die Basisplatten aufgesetzt und analog Beispiel 1 a einer UV-Exposition ausgesetzt. Danach wurden die Haken von den Basisplatten abgenommen und das Ablöseverhalten gemäß Beispiel 1a beurteilt.

### Ergebnis:

| c (Tinuvin326) [%] | c (Farbe) [%] | Ablösbarkeit |
|---|---|---|
| 0,1 | 2 | 1 |
| 0,2 | 5 | 1 |
| 0,3 | 7,5 | 1 |
| 0 | 2 | 2 |
| 0 | 5 | 2 |
| 0 | 7,5 | 2 |

| | | |
|---|---|---|
| 1 = reißer- und rückstandsfrei ablösbar 2 = nicht reißerfrei ablösbar % - Angaben beziehen sich auf den fertigen Kunststoffkörper Farbe: Fibaplast blau transparent 12039400 der Fa. Finke | | |

## Patentansprüche

1. Verwendung eines transparenten Kunststoffteils zum UV-geschützten Verkleben mit einer durch Ziehen in Richtung der Verklebungsebene rückstands- und beschädigungslos entklebenden Klebfolie, wobei das Kunststoffteil mit einem UV-Absorber ausgerüstet ist und so ausgestaltet ist, dass es die Klebfolie und auch deren Anfasser abdeckt abdeckt.

2. Verwendung nach Anspruch 1, **dadurch gekennzeichnet, dass** das Kunststoffteil glasklar ist.

3. Verwendung nach Anspruch 1, **dadurch gekennzeichnet, dass** das Kunststoffteil eine mattierte oder erodierte Oberfläche hat.

4. Verwendung nach Anspruch 1, **dadurch gekennzeichnet, dass** das Kunststoffteil für UV-Strahlen unter 420 nm undurchlässig ist.

5. Verwendung nach Anspruch 1, **dadurch gekennzeichnet, dass** der UV-Absorber im Kunststoff selbst vorhanden ist.

6. Verwendung nach Anspruch 1, **dadurch gekennzeichnet, dass** das Kunststoffteil ein Spritzgussteil ist, wobei der UV-Absorber beim Spritzgießen zugesetzt ist oder bereits im Spritzgusskunststoff vorhanden ist.

7. Verwendung nach Anspruch 1, **dadurch gekennzeichnet, dass** der UV-Absorber in einem transparenten Lack oder einer transparenten Schutzfolie auf dem Kunststoffteil enthalten ist.

8. Verwendung nach Anspruch 1, **dadurch gekennzeichnet, dass** das Kunststoffteil farblos oder gefärbt ist.

9. Verwendung nach Anspruch 1, **dadurch gekennzeichnet, dass** die Klebfolie eine solche auf Basis von Elastomer-Harz-Gemischen ist.

10. Verwendung nach Anspruch 1, **dadurch gekennzeichnet, dass** das Kunststoffseil aus PMMA, POM, PC, Polyester oder insbesondere Polystyrol oder Mischungen davon besteht.

11. Verwendung nach Anspruch 1, **dadurch gekennzeichnet, dass** das Kunststoffteil ein Haken ist.

## Claims

1. Use of a transparent plastic part for UV-protected adhesive bonding, with an adhesive sheet which deadheres without residue or damage by means of pulling in the direction of the bond plane, said part being provided with a UV absorber and configured such that it covers the adhesive sheet and also its grip tab.

2. Use according to claim 1, **characterized in that** the plastic part is glass-clear.

3. Use according to claim 1, **characterized in that** the plastic part has a surface which has been rendered matt or eroded.

4. Use according to claim 1, **characterized in that** the plastic part is transparent to UV radiation below 420 nm.

5. Use according to claim 1, **characterized in that** the UV absorber is present within the plastic itself.

6. Use according to claim 1, **characterized in that** the plastic part is an injection molded part for which the UV absorber is added in the course of injection molding or is already present within the injection molded plastic.

7. Use according to claim 1, **characterized in that** the UV absorber is in a transparent coating material or in a transparent protective sheet on the plastic part.

8. Use according to claim 1, **characterized in that** the plastic part is colorless or colored.

9. Use according to claim 1, **characterized in that** the adhesive sheet is based on elastomer/resin mixtures.

10. Use according to claim 1, **characterized in that** the plastic part is made of PMMA, POM, PC, polyester or, in particular, polystyrene or mixtures thereof.

11. Use according to claim 1, **characterized in that** the plastic part is a hook.

## Revendications

1. Utilisation d'une pièce transparente en matière synthétique pour le collage, protégé des UV, de feuilles adhésives se décollant sans résidus et sans endommagement par traction dans la direction du plan de collage, où la pièce en matière synthétique est équipée d'un absorbeur d'UV et est configurée de manière à recouvrir la feuille adhésive et sa languette de préhension.

2. Utilisation suivant la revendication 1, **caractérisée en ce que** la pièce en matière synthétique est transparente.

3. Utilisation suivant la revendication 1, **caractérisée en ce que** la pièce en matière synthétique possède une surface matifiée ou grainée.

4. Utilisation suivant la revendication 1, **caractérisée en ce que** la pièce en matière synthétique est imperméable aux UV au-dessous de 420 nm.

5. Utilisation suivant la revendication 1, **caractérisée en ce que** l'absorbeur d'UV se trouve dans la matière synthétique même.

6. Utilisation suivant la revendication 1, **caractérisée en ce que** la pièce en matière synthétique est une pièce moulée par injection, où l'absorbeur d'UV est ajouté lors du moulage par injection ou se trouve déjà dans la matière synthétique à mouler par injection.

7. Utilisation suivant la revendication 1, **caractérisée en ce que** l'absorbeur d'UV est contenu dans une peinture transparente ou une feuille de protection transparente sur la pièce en matière synthétique.

8. Utilisation suivant la revendication 1, **caractérisée en ce que** la pièce en matière synthétique est incolore ou colorée.

9. Utilisation suivant la revendication 1, **caractérisée en ce que** la feuille adhésive est à base d'un mélange d'élastomère - résine.

10. Utilisation suivant la revendication 1, **caractérisée en ce que** la pièce en matière synthétique est en PMMA, POM, PC, polyester ou en particulier du polystyrène, ou leurs mélanges.

11. Utilisation suivant la revendication 1, **caractérisée en ce que** la pièce en matière synthétique est un crochet.
